# EUROPEAN PATENT SPECIFICATION

(11) **EP 2 154 394 B1**
(45) Date of publication and mention of the grant of the patent: **12.10.2011**
(21) Application number: 09167665.0
(22) Date of filing: 11.08.2009
(51) Int. Cl.: F16H 7/12

(54) **Method of adjusting the installing tension of a belt in a belt drive of an internal combustion engine for a motor vehicle, belt drive thereof and two-arm tensioner for such a drive**
Verfahren zur Einstellung der Anbringungsspannung eines Riemens in einem Riemenantrieb eines Verbrennungsmotors für ein Motorfahrzeug, Riemenantrieb dafür und zweiarmige Spannungsvorrichtung für den Antrieb
Procédé d'ajustement de la tension d'installation d'une courroie dans une transmission à courroie d'un moteur à combustion interne pour un véhicule à moteur, transmission à courroie associée et tendeur à deux bras pour une telle transmission

(30) Priority: 12.08.2008 IT TO20080634
(43) Date of publication of application: 17.02.2010
(73) Proprietor: Dayco Europe S.R.L., Chieti (IT)
(72) Inventor: Cimino, Antonino, 89100 Reggio Calabria (IT); D'Amicantonio, Luca, 65126 Pescara (IT)
(74) Representative: Jorio, Paolo

(56) References cited:
- EP-A- 1 541 896
- EP-A- 1 596 098
- WO-A-2004/094866
- JP-U- 62 069 657

## Description

The present invention relates to a method of adjusting the installing tension of a belt in a belt drive of an internal combustion engine for a motor vehicle, to a belt drive thereof and to a two-arm tensioner for such a drive.

As is known, belt drives for motor vehicles, and in particular drives for driving the accessories of the engine such as for instance the alternator and the compressor of the air conditioning system, require the use of a tensioner adapted to maintain the loose strand of the belt tensioned.

In order to reduce consumption and emissions, motor vehicles have recently been marketed having a "start-stop" system, i.e. a system providing the use of a reversible machine serving both as a generator and as a motor, instead of an alternator of conventional kind. This system provides for the automatic stop of the internal combustion engine in case the motor vehicle stops, and the use of the electric machine as a motor at start up.

Therefore, during starting, the heat engine is driven by the electric machine and therefore the strand of the belt which is normally tight becomes the loose strand.

In order to ensure that a minimum acceptable tension is maintained on both strands of the belt in all operative conditions, two-arm tensioners have been introduced (see for instance EP-A-1581753 or EP1596098, which represents the closest prior art) having two arms hinged on a common axis, respective pulleys borne by the arms and adapted to cooperate with the respective strands of the belt, and a spring for generating the elastic load the pulleys transmit to the belt.

A problem related to the known two-arm tensioners, in particular when used in combination with belts having a high elastic module, is that the production tolerance of the system determines substantial variations in the installing tension of the belt.

It is the object of the present invention to define a method of adjusting the installing tension of a belt in a drive of an internal combustion engine.

The above said object is achieved by a method according to claim 1.

It is a further object of the present invention to provide a drive and a tensioner adapted to allow the implementation of the above said method.

These objects are achieved by a tensioner according to claim 4 and by a drive according to claim 12.

A preferred embodiment is hereinafter disclosed for a better understanding of the present invention, by way of non-limitative example and with reference to the accompanying drawings, in which:
- figure 1 is a diagrammatic front view of an accessory drive of an internal combustion engine for a motor vehicle;
- figure 2 is a front view of a tensioner of the drive of figure 1, according to a first embodiment of the present invention;
- figure 3 is a section taken along line III-III in figure 2;
- figure 4 is a section taken along line IV-IV in figure 2;
- figure 5 is a front view of a second embodiment of a tensioner according to the present invention;
- figure 6 is a side elevational view of the tensioner of figure 5; and
- figure 7 is a section taken along line VII-VII in figure 5.

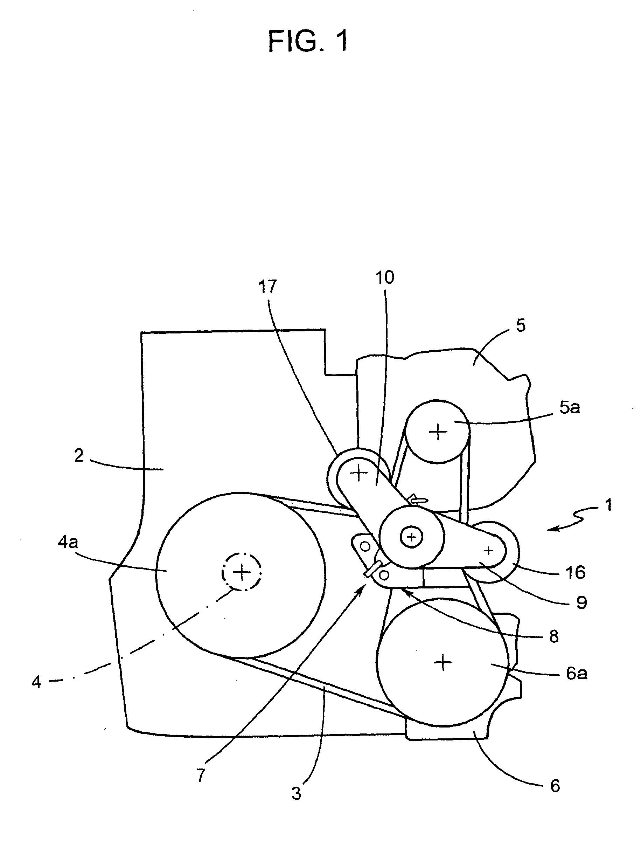

With reference to figure 1, numeral 1 indicates, as a whole, an accessory drive of an internal combustion engine 2 of a motor vehicle.

Drive 1 comprises a belt 3 adapted to transmit the motion from crankshaft 4 to a plurality of accessories, among which a reversible electric machine 5 serving as a starting motor and as an alternator and a compressor 6 for an air conditioning system (not shown).

Belt 3 is wound on a pulley 4a connected to crankshaft 4, a pulley 5a of electric machine 5 and a pulley 6a of compressor 6.

Belt 3 is advantageously a belt having high modulus, and in particular has a dynamic elastic modulus higher than 110,000 N/rib/strand, calculated after 10,000 cycles performed by applying a predetermined tension of 600 N/rib/strand and a sinusoidal variation at 15 Hz of ± 400 N/rib/strand.

Preferably, the modulus is in the range between 110,000 N/rib/strand and 200,000 N/rib/strand. Even more preferably, the modulus is in the range between 125,000 N/rib/strand and 175,000 N/rib/strand.

Drive 1 further comprises a tensioner 7 of the two-arm type.

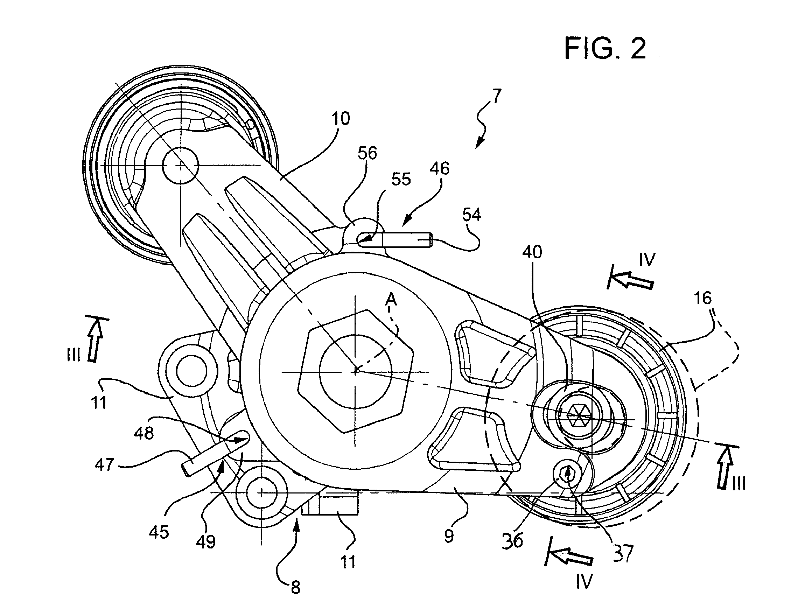

Tensioner 7 (figures 2-4) substantially comprises an anchoring body 8 for anchoring to the engine, and a first arm 9 and a second arm 10 hinged to body 8 about a common axis A.

Body 8 substantially comprises an anchoring plate 11 and a sleeve 12 integral with plate 11 and defining axis A. Sleeve 12 has a cup-shaped portion 12a extending frontally from plate 11, and a tubular portion 12b having a shorter diameter and extending at the back of plate 11.

First arm 9 and second arm 10 comprise respective end hubs 14, 15, which are hinged to sleeve 12, and respective pulleys 16, 17 mounted idly on respective free ends 21, 22 of the arms.

A torsion bar spring 18 having axis A and advantageously formed by a bundle of reciprocally parallel threads 19 has its ends rigidly connected respectively to hub 14 of first arm 9 and to hub 15 of second arm 10.

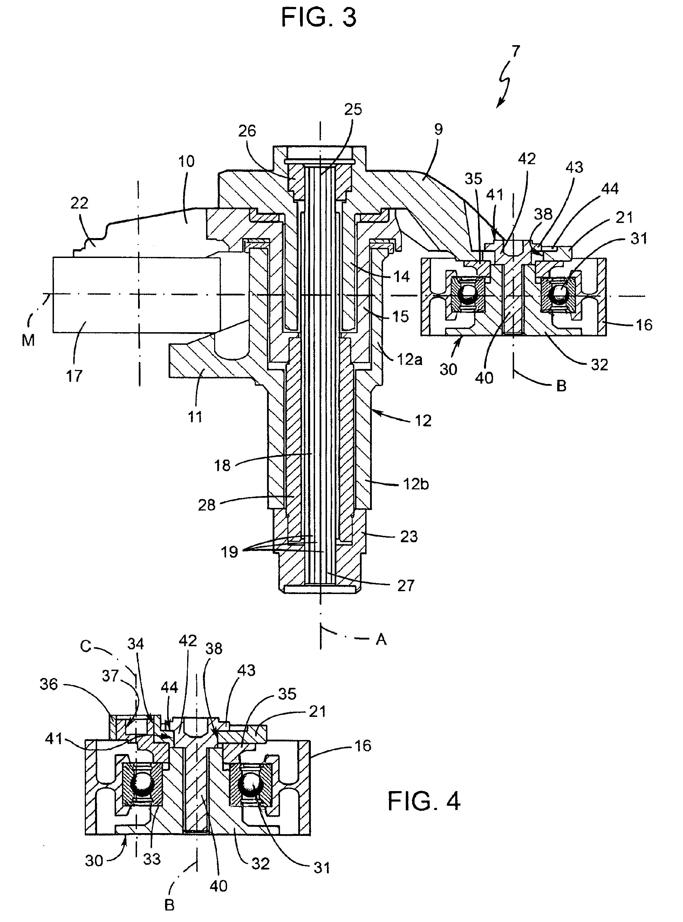

Figure 3 shows the configuration of tensioner 7 in greater detail.

Hub 15 of second arm 10 is housed within cup-shaped portion 12a of sleeve 12. Hub 14 of first arm 9 is rotatably housed within hub 15 which has a hollow structure. Arms 9, 10 extending from the top ends of respective hubs 14, 15 are profiled so that pulleys 16, 17 are arranged with the same centre plane M coinciding with the centre plane of belt 3.

Torsion bar spring 18 has an end 25 which is force-fitted within a first end cap 26, in turn forced within hub 14 so as to rigidly connect the front end of spring 25 with hub 14.

An opposite end 27 of spring 18, which extends at the back from tubular portion 12b, is force-fitted in a second end cap 23 in turn forced on an end of a sleeve 28 through-mounted within tubular portion 12b. The other end of sleeve 28 is rigidly fixed by means of a forced connection to hub 15 of second arm 10, so that spring 18 is connected between the two arms 9, 10 so as to be subjected to torsion loads as the relative angular position of the arms varies.

The means for axially and radially supporting arms 9, 10 together and with respect to body 8, as well as the means for dampening relative motion are not described in detail as they are not part of the present invention.

According to the present invention, pulley 16 is mounted on first arm 9 with the possibility of adjusting the position of its axis B.

As may clearly be noted in figures 3 and 4, pulley 16 is mounted on a hub 30 by means of a bearing 31. Hub 30 consists of two parts: a pivot 32 integrally defining a first shoulder 33 for bearing 31, and a ring 35 mounted on pivot 32 and axially interposed between bearing 31 and arm 9 so as to define an opposite shoulder for bearing 31. Ring 35 has an axial cylindrical eccentric projection 36 (figure 4) having axis C parallel to axis B, which is housed in a hole 34 of end 21 of arm 9 and is provided with a recessed hexagon-shaped seat 37.

Projection 36 therefore consists of an eccentric pivot that allows for the rotation of pulley 16 with respect to arm 9 about axis C.

Arm 9 also has, at its end 21, a longitudinal through-slot 38 having a circumferential arc shape with centre on axis C, through which a screw 40 is mounted. Screw 40 is screwed in pivot 32 and is provided with a head 41 arranged on the opposite side of arm 9 with respect to hub 30, so as to block hub 30 on arm 9. Head 41 is advantageously provided with a cylindrical guide portion 42, which slidingly engages slot 38 without side clearance, and with a shoulder 43 adapted to cooperate axially with a flattening 44 of arm 9 obtained on the face thereof opposite to pulley 16 to define an axial stop position.

Tensioner 1 is finally provided with two blocking devices 45, 46 which allow to maintain arms 9, 10 in a fixed mounted position.

In particular, device 45 blocks second arm 10 to anchoring body 8, and advantageously consists of a pin 47 which may be inserted in a though-hole 48 of an appendix 49 of hub 15 of the second arm and in a corresponding hole (not shown) of anchoring plate 11.

Device 46 blocks first arm 9 with respect to second arm 10, and advantageously consists of a pin 54 which may be inserted in a through-hole 55 of an appendix 56 of hub 14 of first arm 9 and in a corresponding hole (not shown) of second arm 10.

The relative position between arms 9, 10 defined by device 46 is such as to load spring 18 with a predetermined preload (torsion torque).

The method for mounting tensioner 7 on engine 2 is disclosed hereinafter.

Anchoring body 8 is conventionally fixed on engine 2 by means of appropriate screws (not shown).

The mounted position on engine 2 is such as to arrange axis A within belt 3, preferably on the bisecting line of the angle formed in static conditions between the strands of belt 3 adjacent to pulley 5a of machine 5.

In the mounted position, arms 9, 10 are blocked by respective blocking devices 45, 46 in the mounted position thereof. Pulley 16 is advantageously arranged with axis C at the end of slot 38 which is farthest from axis A of the arms (dotted position in Figure 2) so as to assist the mounting of belt 3 on pulleys 4a, 4b, 4c and between pulleys 16, 17. Screw 40 is loosened. Arm 9 is subjected to the elastic torque exerted by spring 18, which tends to rotate it anticlockwise with reference to figure 2, which torque is balanced by the constraining reaction exerted by pin 54 of blocking device 46.

Once belt 3 is fitted, pulley 16 is rotated about axis C acting on seat 37 by means of an appropriate key; pivot 32 and screw 40 slide along slot 38. The tension of belt 3 progressively increases as pulley 16 approaches pulley 17, and produces a torque on arm 9 which counteracts the elastic torque of spring 18. When the torque produced by the tension of belt 3 balances the torque exerted by spring 18, the (static) tension of the belt equals the nominal design value. This condition may easily be detected by noting that, in conditions in which the above said torques are balanced, the constraining reaction of pin 54 is null and therefore pin 54 is free to be axially extracted. Before extracting pin 54, pulley 16 is blocked on arm 19 by means of screw 40 in the above said balance position, in which it is ensured that the installing tension of belt 3 is equivalent to the nominal design value.

Pins 54 and 47 are therefore extracted, and tensioner 7 is ready for use.

The operation in use is known per se. Each of pulleys 16, 17 acts on a respective strand of belt 3 and the minimum tension is ensured in the strand that, depending on the working mode, is the loose strand.

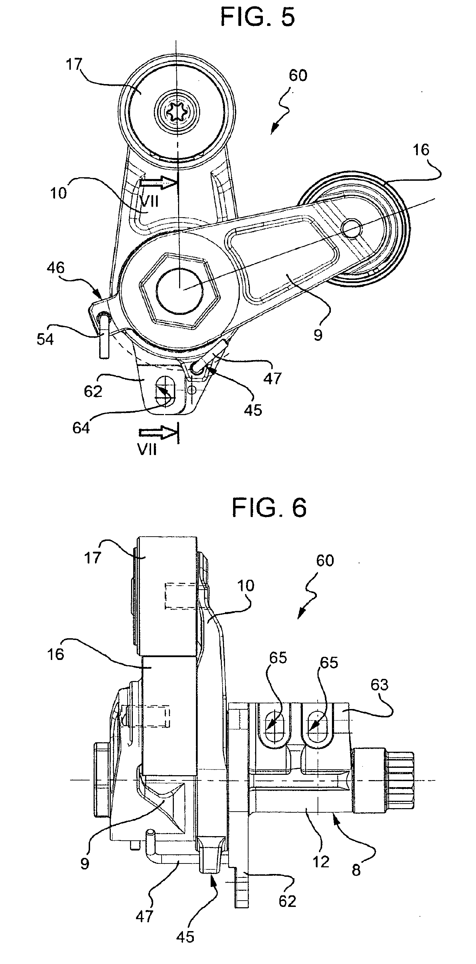

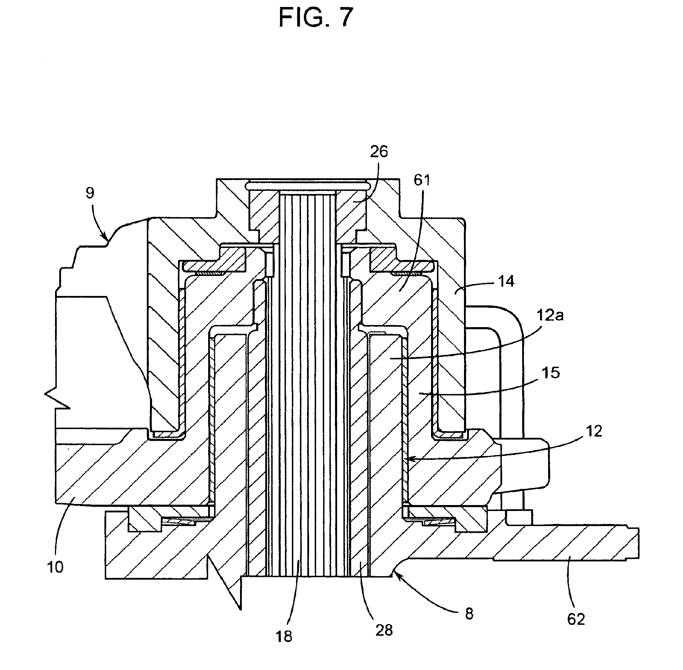

Figures 5 to 7 show a two-arm tensioner 60 according to another embodiment of the present invention. Tensioner 60 is disclosed hereinafter as far as it differs from previously disclosed tensioner 7, by using the same reference numerals to designate parts identical or corresponding to already disclosed parts.

In tensioner 60, sleeve 12 of anchoring body 8 has a substantially constant section. Hub 15 of second arm 10 is in this case mounted outside end portion 12a of sleeve 12. Spring 18 is connected to arms 9, 10 in a manner similar to that in tensioner 7; the only difference consists in that sleeve 28 extends axially beyond sleeve 12 in a front direction, so as to be rigidly connected to an annular wall 61 of hub 15.

According to this embodiment, axis B of pulley 16 of first arm 9 is fixed with respect to arm 9.

Anchoring body 8 (figure 6) is provided with two clamping flanges 62, 63 which are integral with sleeve 12, of which one (62) extends on a plane perpendicular to axis A and the other (63) on a plane parallel to such an axis.

Flange 62 has a through-slot 64 which is radially elongated with respect to axis A. Plate 62 has two slots 65 extending in a direction parallel to slot 64.

Tensioner 60 is mounted on engine 2 by means of three screws (not shown) which engage respective slots 64, 65. When the three screws are not tightened, the tensioner is free to move, as a whole, in a vertical direction perpendicular to axis A.

Upon mounting, belt 3 is fitted on pulleys 16, 17 with tensioner 60 arranged in the most advantageous position to achieve the result, i.e. closest to electric machine 5 (i.e. with the engine fastening screws arranged at the lower ends of slots 64).

Subsequently, tensioner 60 is moved as a whole so as to progressively tension belt 3. Even in this case, the correct mounted position is obtained when arms 9, 10 are balanced under the action of spring 18 and the tension of the belt, and this condition corresponds to the absence of constraining reaction on peg 54 of blocking device 46. The tensioner is blocked on the engine in the above said position, after which pins 47, 54 may be removed.

From an analysis of the disclosed method, the advantages which may be obtained with the present invention are apparent. In particular, in virtue of the use of a tensioner provided with a member movable according to a degree of freedom (pulley 16 in tensioner 7 and anchoring body 8 in tensioner 60), an accurate adjustment of the installing tension of belt 3 may be carried out, thus compensating the variations induced by the manufacturing and mounting tolerances in the known drives, especially in the case in which a high modulus belt is used.

It is finally apparent that the disclosed method, drive 1, and tensioners 7, 60 may be modified or varied without departing from the protective scope defined in the claims.

## Claims

1. A method of adjusting the installing tension of a belt (3) in a belt drive (1) of an internal combustion engine (2), the drive (1) including a first pulley (4a) connected to the crankshaft (4) of the engine (2) and at least one second pulley (5b) connected to a reversible electric machine (5), said pulleys (4a, 5a) being rotationally coupled by said belt (3), a two-arm tensioner (7; 60) provided with an anchoring body (8) for anchoring to the engine (2), with a first arm (9) carrying a first pulley (16) and with a second arm (10) carrying a second pulley (17) hinged to the anchoring body (8) about a common axis (A), and with a spring (18) acting between the two arms (9, 10) to keep said pulleys (16, 17) engaged with corresponding strands of said belt (3), a member (16; 8) of said tensioner being movable according to a degree of freedom which allows to vary the installing tension of said belt (3),
the method being **characterized by** comprising the steps of:
mounting said tensioner (7; 60) to said engine (2) with said arms (9, 10) blocked in a relative fixed position, to which a predetermined load condition of said spring (18) corresponds, by means of releasable blocking means (45, 46);
fitting the belt (3) onto said pulleys (4a, 5a) with said movable member (16; 8) arranged at a position of minimum tensioning of the belt (3);
adjusting the position of said movable member (16; 8) to progressively increase the tension of said belt (3) until a nominal installing tension is reached, in which said arms (9, 10) are balanced under the loads exerted by said spring (18) and said belt (3);
blocking said movable member (16; 8) of said tensioner (7; 60) at the position corresponding to said nominal installing tension; and
releasing said blocking means (45, 46).

2. A method as claimed in claim 1, **characterized in that** said movable member is one (16) of the pulleys (16, 17) of the tensioner (7), which is mounted to the corresponding arm (9) with the possibility of adjusting the position of the rotation axis (B) thereof.

3. A method as claimed in claim 1, **characterized in that** said movable member is said anchoring body (8) of said tensioner (60), which is mountable to said engine (2) at an adjustable position along an axis perpendicular to the common axis (A) of said arms (9, 10).

4. A two-arm tensioner for a drive (1) of an internal combustion engine (2), the drive (1) including a belt (3) for transmitting torque between a first pulley (4a) connected to the crankshaft (4) of the engine (2) and at least a second pulley (5a) connected to a reversible electric machine (5), the tensioner being provided with an anchoring body (8) for anchoring to the engine (2), with a first arm (9) carrying a first pulley (16) and with a second arm (10) carrying a second pulley (17) hinged to the anchoring body (8) about a common axis (A), and with a spring (18) acting between the two arms (9, 10) to keep said pulleys (16, 17) engaged with the corresponding strands of said belt (3),
including a movable member (16; 8) according to a degree of freedom which allows to vary the installing tension of said belt (3), blocking means (45, 46) for blocking said arms (9, 10) in a relatively fixed position to which a predetermined load condition of said spring (18) corresponds, the tensioner being **characterized by** said blocking means (45, 46) being releasable when said arms (9, 10) are balanced under the loads exerted by said spring (18) and by said belt (3).

5. A tensioner as claimed in claim 4, **characterized in that** said movable member is one (16) of the pulleys (16, 17) of the tensioner (7), said pulley (16) being mounted to the corresponding arm (9) with the possibility of adjusting the position of the rotation axis (B) thereof.

6. A tensioner as claimed in claim 5, **characterized in that** said pulley (16) is mounted to a hub (30) defining the rotation axis (B) of the pulley itself and rotational with respect to said corresponding arm (9) about an adjustment axis (C) other than said rotation axis (B) of the pulley (16).

7. A tensioner as claimed in claim 6, **characterized in that** said adjustment axis (C) is defined by a pin (36) carried by said hub (30) and engaging a seat (34) of said corresponding arm (9), said pin (36) being provided with a seat (37) for an operating key.

8. A tensioner as claimed in claim 6 or 7, **characterized in that** it includes blocking means (40) to block said hub (30) with respect to said corresponding arm (9) .

9. A tensioner as claimed in claim 8, **characterized in that** said blocking means include a screw (40) axially screwed into said hub (30) and sliding in a guide (38) of said arm (9).

10. A tensioner as claimed in claim 4, **characterized in that** said movable member is said anchoring body (8) of said tensioner (60), which is mountable to said engine (2) at an adjustable position along a direction perpendicular to the common axis (A) of said arms (9, 10).

11. A tensioner as claimed in claim 10, **characterized in that** said anchoring body (8) includes a plurality of slots (64, 65) elongated along said direction and parallel to one another.

12. A belt drive for an internal combustion engine of a motor vehicle including a first pulley (4a) connected to the crankshaft (4) of the engine (2), at least one second pulley (5a) connected to a reversible electric machine (5), a drive belt (3) cooperating with said first pulley (4a) and with the second pulley (4b), and a two-arm tensioner (7; 60), **characterized in that** the tensioner (7; 60) is made according to anyone of the claims from 4 to 11.

13. A drive as claimed in claim 12, **characterized in that** said belt (3) displays a dynamic elastic modulus higher than 110,000 N/rib/strand calculated after 10,000 cycles performed by applying a predetermined tension of 600 N/rib/strand and a sinusoidal variation at 15 Hz of ± 400 N/rib/strand.

14. A drive as claimed in claim 13, **characterized in that** said modulus is between 110,000 N/rib/strand and 200,000 N/rib/strand.

15. A drive as claimed in claim 13, **characterized in that** said modulus is between 125,000 N/rib/strand and 175,000 N/rib/strand.

## Patentansprüche

1. Verfahren zum Einstellen der Installationsspannung eines Riemens (3) in einem Riemenantrieb (1) einer Verbrennungsmaschine (2), wobei der Antrieb (1) eine erste Scheibe (4a), die mit der Welle (4) der Maschine (2) verbunden ist, und wenigstens eine zweite Scheibe (5b), die mit einer elektrischen Umkehrmaschine (5) verbunden ist, wobei die Scheiben (4a, 5a) durch den Riemen (3) rotationsgekoppelt sind, einen Zweiarmspanner (7; 60) umfasst, der mit einem Befestigungskörper (8) zur Befestigung an der Maschine (2), mit einem ersten Arm (9), der eine erste Scheibe (16) trägt, und mit einem zweiten Arm (10), der eine zweite Scheibe (17) trägt, die zum Befestigungskörper (8) um eine gemeinsame Achse (A) schwenkbar sind, und mit einer Feder (18) versehen ist, die zwischen den beiden Armen (9, 10) wirkt, um die Scheiben (16, 17) in Eingriff mit entsprechenden Strängen des Riemens (3) zu halten, wobei ein Element (16; 8) des Spanners gemäß eines Freiheitsgrads beweglich ist, was gestattet, die Installationsspannung des Riemens (3) zu variieren,
wobei das Verfahren **gekennzeichnet ist durch**:
Befestigen des Spanners (7; 60) an der Maschine (2) mit den Armen (9, 10), die in einer relativen festen Position blockiert sind, der einer vorbestimmten Lastbedingung der Feder (18) entspricht, mittels eines lösbaren Blockiermittels (45, 46);
Anbringen des Riemens (3) auf den Scheiben (4a, 5a) mit dem beweglichen Element (16; 8), das in einer Position angeordnet ist, in der der Riemen (3) minimal gespannt ist;
Einstellen der Position des beweglichen Elements (16; 8), so dass die Spannung des Riemens (3) zunehmend zunimmt, bis eine nominelle Installationsspannung erreicht ist, bei welcher die Arme (9, 10) unter den Lasten, die **durch** die Feder (18) und den Riemen (3) ausgeübt werden, ausgeglichen sind;
Blockieren des beweglichen Elements (16; 8) des Spanners (7; 60) in der Position, die der nominellen Installationsspannung entspricht; und
Lösen des Blockiermittels (45, 46).

2. Verfahren nach Anspruch 1, **dadurch gekennzeichnet, dass** das bewegliche Element eines (16) der Scheiben (16, 17) des Spanners (7) ist, die an einem entsprechenden Arm (9) befestigt ist, mit der Möglichkeit, die Position der Rotationsachse (B) davon einzustellen.

3. Verfahren nach Anspruch 1, **dadurch gekennzeichnet, dass** das bewegliche Element der Befestigungskörper (8) des Spanners (60) ist, der an der Maschine (2) in einer einstellbaren Position entlang einer Achse befestigbar ist, die zu der gemeinsamen Achse (A) der Arme (9, 10) rechtwinklig ist.

4. Zweiarmspanner für einen Antrieb (1) einer Verbrennungsmaschine (2), wobei der Antrieb (1) einen Riemen (3) zum Übertragen eines Drehmoments zwischen einer ersten Scheibe (4a), die mit der Welle (4) der Maschine (2) verbunden ist, und wenigstens einer zweiten Scheibe (5a), die mit einer elektrischen Umkehrmaschine (5) verbunden ist, umfasst, wobei der Spanner mit einem Befestigungskörper (8) zur Befestigung an der Maschine (2), mit einem ersten Arm (9), der eine erste Scheibe (16) trägt, und mit einem zweiten Arm (10), der eine zweite Scheibe (17) trägt, die um eine gemeinsame Achse (A) zum Befestigungskörper (8) schwenkbar sind, und mit einer Feder (18) versehen ist, die zwischen den zwei Armen (9, 10) wirkt, so dass die Scheiben (16, 17) in Eingriff mit den entsprechenden Strängen des Riemens (3) gehalten werden,
ein gemäß eines Freiheitsgrades bewegliches Element (16; 8) umfassend, was gestattet, die Installationsspannung des Riemens (3) zu variieren, Blockiermittel (45, 46) zum Blockieren der Arme (9, 10) in einer relativ festen Position, der eine vorbestimmte Lastbedingung der Feder (18) entspricht, wobei der Spanner **dadurch gekennzeichnet ist, dass** das Blockiermittel (45, 46) lösbar ist, wenn die Arme (9, 10) unter den Lasten ausgeglichen sind, die durch die Feder (18) und den Riemen (3) ausgeübt werden.

5. Spanner nach Anspruch 4, **dadurch gekennzeichnet, dass** das bewegliche Element eine (16) der Scheiben (16, 17) des Spanners (7) ist, wobei die Scheibe (16) an dem entsprechenden Arm (9) befestigt ist, mit der Möglichkeit, die Position der Rotationsachse (B) davon einzustellen.

6. Spanner nach Anspruch 5, **dadurch gekennzeichnet, dass** die Scheibe (16) an einer Nabe (30) befestigt ist, die die Rotationsachse (B) der Scheibe selbst definiert und rotierend bezüglich des entsprechenden Arms (9) um eine Einstellachse (C) ist, die sich von der Rotationsachse (B) der Scheibe (16) unterscheidet.

7. Spanner nach Anspruch 6, **dadurch gekennzeichnet, dass** die Einstellachse (C) durch einen Bolzen (36) definiert ist, der von der Nabe (30) getragen wird, und mit einer Aufnahme (34) des entsprechenden Arms (9) in Eingriff steht, wobei der Bolzen (36) mit einer Aufnahme (37) für einen Bedienschlüssel versehen ist.

8. Spanner nach einem der Ansprüche 6 oder 7, **dadurch gekennzeichnet, dass** er ein Blockiermittel (40) umfasst, um die Nabe (30) bezüglich dem entsprechenden Arm (9) zu blockieren.

9. Spanner nach Anspruch 8, **dadurch gekennzeichnet, dass** das Blockiermittel eine Schraube (40) umfasst, die axial in die Nabe (30) geschraubt ist, und in einer Führung (38) des Arms (9) gleitet.

10. Spanner nach Anspruch 4, **dadurch gekennzeichnet, dass** das bewegliche Element der Befestigungskörper (8) des Spanners (60) ist, der an der Maschine (2) in einer einstellbaren Position entlang einer Richtung befestigbar ist, die rechtwinklig zu der gemeinsamen Achse (A) der Arme (9, 10) ist.

11. Spanner nach Anspruch 10, **dadurch gekennzeichnet, dass** der Befestigungskörper (8) mehrere Schlitze (64, 65) umfasst, die sich entlang der Richtung und parallel zueinander ausdehnen.

12. Riemenantrieb für eine Verbrennungsmaschine eines Kraftfahrzeugs, umfassend eine erste Scheibe (4a), die mit der Welle (4) der Maschine (2) verbunden ist, wenigstens eine zweite Scheibe (5a), die mit einer umkehrbaren elektrischen Maschine (5) verbunden ist, einen Antriebsriemen (3), der mit der ersten Scheibe (4a) und mit der zweiten Scheibe (4b) zusammenwirkt, und einen Zweiarmspanner (7; 60), **dadurch gekennzeichnet, dass** der Spanner (7; 60) entsprechend einem der Ansprüche 4 bis 11 hergestellt ist.

13. Antrieb nach Anspruch 12, **dadurch gekennzeichnet, dass** der Riemen (3) ein dynamisches Elastizitätsmodul aufweist, das größer ist als 110.000 N/Rippe/Strang, berechnet nach 10.000 Wiederholungen, die durch Anlegen einer vorbestimmten Spannung von 600 N/Rippe/Strang und einer sinusförmigen Variation bei 15 Hz von ± 400 N/Rippe/Strang durchgeführt werden.

14. Antrieb nach Anspruch 13, **dadurch gekennzeichnet, dass** das Modul zwischen 110.000 N/Rippe/Strang und 200.000 N/Rippe/Strang liegt.

15. Antrieb nach Anspruch 13, **dadurch gekennzeichnet, dass** das Modul zwischen 125.000 N/Rippe/Strang und 175.000 N/Rippe/Strang liegt.

## Revendications

1. Procédé de réglage de la tension d'installation d'une courroie (3) dans une transmission par courroie (1) d'un moteur à combustion interne (2), la transmission (1) comprenant une première poulie (4a) reliée au vilebrequin (4) du moteur (2) et au moins une deuxième poulie (5b) reliée à une machine électrique réversible (5), lesdites poulies (4a, 5a) étant couplées en rotation par l'intermédiaire de ladite courroie (3), un tendeur à deux bras (7 ; 60) doté d'un corps d'ancrage (8) destiné à l'ancrer au moteur (2), d'un premier bras (9) supportant une première poulie (16) et d'un deuxième bras (10) supportant une deuxième poulie (17) articulés sur le corps d'ancrage (8) autour d'un axe commun (A), et d'un ressort (18) agissant entre les deux bras (9, 10) pour maintenir lesdites poulies (16, 17) en contact avec des torons correspondants de ladite courroie (3), un élément (16 ; 8) dudit tendeur étant mobile selon un degré de liberté qui permet de faire varier la tension d'installation de ladite courroie (3),
le procédé étant **caractérisé par le fait qu'**il comprend les étapes consistant à :
monter ledit tendeur (7 ; 60) sur ledit moteur (2), lesdits bras (9 ; 10) étant bloqués dans une position fixe relative, à laquelle correspond une condition de charge prédéterminée dudit ressort (18), par l'intermédiaire d'un moyen de blocage libérable (45, 46) ;
installer la courroie (3) sur lesdites poulies (4a, 5a), ledit élément mobile (16 ; 8) étant agencé à une position de tension minimale de la courroie (3) ;
régler la position dudit élément mobile (16 ; 8) pour augmenter progressivement la tension de ladite courroie (3) jusqu'à ce qu'une tension d'installation nominale soit atteinte, où lesdits bras (9, 10) sont équilibrés sous les charges exercées par ledit ressort (18) et ladite courroie (3) ;
bloquer ledit élément mobile (16 ; 8) dudit tendeur (7 ; 60) à la position correspondant à ladite tension d'installation nominale ; et
libérer ledit moyen de blocage (45, 46).

2. Procédé selon la revendication 1, **caractérisé en ce que** ledit élément mobile est l'une (16) des poulies (16, 17) du tendeur (7), qui est montée sur le bras correspondant (9) avec la possibilité de régler la position de l'axe de rotation (B) de celle-ci.

3. Procédé selon la revendication 1, **caractérisé en ce que** ledit élément mobile est ledit corps d'ancrage (8) dudit tendeur (60), qui peut être monté sur ledit moteur (2) à une position réglable le long d'un axe perpendiculaire à l'axe commun (A) desdits bras (9, 10).

4. Tendeur à deux bras destiné à une transmission (1) d'un moteur à combustion interne (2), la transmission (1) comprenant une courroie (3) destinée à transmettre un couple entre une première poulie (4a) reliée au vilebrequin (4) du moteur (2) et au moins une deuxième poulie (5a) reliée à une machine électrique réversible (5), le tendeur étant doté d'un corps d'ancrage (8) destiné à l'ancrer au moteur (9), d'un premier bras (9) supportant une première poulie (16) et d'un deuxième bras (10) supportant une deuxième poulie (17) articulés sur le corps d'ancrage (8) autour d'un axe commun (A), et d'un ressort (18) agissant entre les deux bras (9, 10) pour maintenir lesdites poulies (16, 17) en contact avec les torons correspondants de ladite courroie (3),
comprenant un élément mobile (16 ; 8) selon un degré de liberté qui permet de faire varier la tension d'installation de ladite courroie (3), un moyen de blocage (45, 46) destiné à bloquer lesdits bras (9, 10) dans une position relativement fixe à laquelle correspond une condition de charge prédéterminée dudit ressort (18), le tendeur étant **caractérisé par** ledit moyen de blocage (45, 46) qui est libérable lorsque lesdits bras (9, 10) sont équilibrés sous les charges exercées par ledit ressort (18) et par ladite courroie (3).

5. Tendeur selon la revendication 4, **caractérisé en ce que** ledit élément mobile est l'une (16) des poulies (16, 17) du tendeur (7), ladite poulie (16) étant montée sur le bras correspondant (9) avec la possibilité de régler la position de l'axe de rotation (B) de celle-ci.

6. Tendeur selon la revendication 5, **caractérisé en ce que** ladite poulie (16) est montée sur un moyeu (30) définissant l'axe de rotation (B) de la poulie elle-même et en rotation par rapport audit bras correspondant (9) autour d'un axe de réglage (C) autre que ledit axe de rotation (B) de la poulie (16).

7. Tendeur selon la revendication 6, **caractérisé en ce que** ledit axe de réglage (C) est défini par une broche (36) supportée par ledit moyeu (30) et s'insérant dans un siège (34) dudit bras correspondant (9), ladite broche (36) est dotée d'un siège (37) destiné à une clé de fonctionnement.

8. Tendeur selon la revendication 6 ou 7, **caractérisé en ce qu'**il comprend un moyen de blocage (40) pour bloquer ledit moyeu (30) par rapport audit bras correspondant (9).

9. Tendeur selon la revendication 8, **caractérisé en ce que** ledit moyen de blocage comprend une vis (40) axialement vissée dans ledit moyeu (30) et coulissant dans un guide (38) dudit bras (9).

10. Tendeur selon la revendication 4, **caractérisé en ce que** ledit élément mobile est ledit corps d'ancrage (8) dudit tendeur (60), qui peut être monté sur ledit moteur (2) à une position réglable suivant une direction perpendiculaire à l'axe commun (A) desdits bras (9, 10).

11. Tendeur selon la revendication 10, **caractérisé en ce que** ledit corps d'ancrage (8) comprend une pluralité de fentes (64, 65) allongées le long de ladite direction et parallèles les unes aux autres.

12. Transmission par courroie pour un moteur à combustion interne d'un véhicule à moteur comprenant une première poulie (4a) reliée au vilebrequin (4) du moteur (2), au moins une deuxième poulie (5a) reliée à une machine électrique réversible (5), une courroie de transmission (3) coopérant avec ladite première poulie (4a) et avec la deuxième poulie (4b), et un tendeur à deux bras (7 ; 60), **caractérisée en ce que** le tendeur (7 ; 60) est réalisé selon l'une quelconque des revendications 4 à 11.

13. Transmission selon la revendication 12, **caractérisée en ce que** ladite courroie (3) affiche un module d'élasticité dynamique supérieur à 110 000 N/nervure/toron calculé après 10 000 cycles réalisés en appliquant une tension prédéterminée de 600 N/nervure/toron et une variation sinusoïdale à 15 Hz de ± 400 N/nervure/toron.

14. Transmission selon la revendication 13, **caractérisée en ce que** ledit module se situe entre 110 000 N/nervure/toron et 200 000 N/nervure/toron.

15. Transmission selon la revendication 13, **caractérisée en ce que** ledit module se situe entre 125 000 N/nervure/toron et 175 000 N/nervure/toron.
